# EUROPÄISCHE PATENTANMELDUNG

(11) **EP 2 214 105 A1**
(43) Veröffentlichungstag der Anmeldung: **04.08.2010**
(21) Anmeldenummer: 09450222.6
(22) Anmeldetag: 24.11.2009
(51) Int. Cl.: G06F 17/30

(54) **Suchmaschine**

(30) Priorität: 03.02.2009 AT 542009 U
(71) Anmelder: LACKNER, Christian, 9581 Ledenitzen (AT)
(72) Erfinder: Lackner, Christian, 9581 Ledenitzen (AT)
(74) Vertreter: Peham, Alois

(57) **Zusammenfassung**

Die Erfindung betrifft eine Suchmaschine zur Ermittlung von Dokumenten einer Datenbasis, die einer Abfrage eines Benutzers entsprechen, wobei die Dokumente einer von mehreren Objektgruppen zugeordnet sind, wobei weiterhin jede Objektgruppe Merkmalsklassen aufweist, denen die Dokumente dieser Objektgruppe ebenfalls zugeordnet sind, und wobei die Suche nach einem Dokument auf der Auswahl von Objektgruppen und Merkmalsklassen beruht und anhand einer Darstellung (1, 2, 3, 4, 5, 6) der verfügbaren Objektgruppen und Merkmalsklassen, der in einer Merkmalklasse enthaltenen unterschiedlichen Merkmalsausprägungen und der durch einen bestimmten Auswahlvorgang ermittelten Dokumente in einer einzelnen Betrachtungsebene erfolgt.

## Beschreibung

Die Erfindung betrifft eine Suchmaschine zur Ermittlung von Dokumenten einer Datenbasis, die einer Abfrage eines Benutzers entsprechen.

Als Suchmaschinen werden Programme zur Recherche nach Dokumenten bezeichnet, die in einer Datenbasis wie beispielsweise einem Computer oder einem Computernetzwerk wie dem World Wide Web gespeichert sind. Zur Beschleunigung der Suche wird ein Schlüsselwort-Index für die Datenbasis angelegt

Dabei wird in der Regel auf dem Prinzip der Volltextindexierung für jedes Dokument der Datenbasis die Häufigkeitsverteilung von Begriffen in einem Schlüsselwort-Index erfasst. Dieser Index wird benutzt, um zum Anfragezeitpunkt die Dokumente zu bestimmen, in denen die gesuchten Begriffe auftreten.

Nach Eingabe eines Suchbegriffs liefert eine Suchmaschine danach eine Liste von Verweisen auf möglicherweise relevante Dokumente, die meist um einen kurzen Auszug des jeweiligen Dokuments ergänzt sind.

Die Suche auf der Basis von Schlüsselworten, die gegebenenfalls durch logische Operatoren wie zum Beispiel "und", "oder" und "nicht" verknüpft sein können, ist allerdings oftmals nicht effizient. Die ausschliessliche Verwendung von Schlüsselwörtern in Verbindung mit booleschen Operatoren führt häufig zu einem Misserfolg der Suchmaschine bei der Erkennung des richtigen Kontexts der Suchbegriffe. Dies kann zu dem Abrufen einer grossen Informationsmenge aus der Datenbank führen, die häufig nicht sehr viel mit der Fragestellung des Benutzers zu tun hat.

Da bekannte Suchmaschinen die Komplexität der Benutzereingabe nicht ausreichend verarbeiten, kommt es häufig vor, dass es sehr schwierig ist, relevante Dokumentation für ein der Suchanfrage zugrunde liegendes komplexes Problem zu recherchieren.

Ein weiteres Problem bei derzeitigen Verfahren zum Abrufen von Dokumenten besteht darin, dass der Benutzer bestimmte, bei einer Suche ermittelte Dokumente wichtiger als andere erachten kann, der Benutzer jedoch nicht in der Lage ist, ein Kriterium für die Relevanz der zu ermittelnden Dokumente vorab explizit auszudrücken. Bei der Arbeit mit komplexen Kontexten ist es deshalb häufig schwierig, ein Relevanzkriterium genau anzugeben.

Aus der DE 199 52 769 B4 ist ein Computer-Recherche-System bekannt, mit dem eine Suche zu in natürlicher Sprache formulierten Abfragen durchgeführt werden kann. Das Verfahren reduziert die in natürlicher Sprache eingegebene Abfrage zu einem Vektor von Wortstämmen, und kann außerdem die abzusuchenden Dokumente zu Vektoren von Wortstämmen reduzieren, wobei ein Wortstamm ein Wort oder ein Teil eines Worts ist, aus dem die verschiedenen Formen eines Worts abgeleitet werden.

Die Suchmaschine analysiert die Vektoren von Wortstämmen, um Parameter wie zum Beispiel die Häufigkeit, mit der Wortstämme in der Abfrage und in Dokumenten der Datenbasis auftreten, und/oder die Signifikanz der in den Dokumenten erscheinenden Wortstämme und andere Vergleichsinformationen zwischen dem Abfragevektor und den Datenbank-Dokumentvektoren zu bestimmen, um so die Eignung eines Dokuments, als Ergebnis der Abfrage zu dienen, festzustellen.

Der Erfindung liegt die Aufgabe zugrunde, herkömmliche Suchmaschinen weiterzuentwickeln.

Diese Aufgabe wird erfindungsgemäß gelöst mit einer eingangs genannten Suchmaschine, bei der die Dokumente einer von mehreren Objektgruppen zugeordnet sind, bei der weiterhin jede Objektgruppe Merkmalsklassen aufweist, denen die Dokumente dieser Objektgruppe ebenfalls zugeordnet sind, und bei der die Suche nach einem Dokument auf der Auswahl von Objektgruppen und Merkmalsklassen beruht und anhand einer Darstellung der verfügbaren Objektgruppen und Merkmalsklassen, der in einer Merkmalklasse enthaltenen unterschiedlichen Merkmalsausprägungen und der durch einen bestimmten Auswahlvorgang ermittelten Dokumente in einer einzelnen Betrachtungsebene erfolgt.

Erfindungsgemäß erfolgt die Suche nach Dokumenten durch Auswahl vorgegebener Filterkriterien, der Objektgruppen, Merkmalsklassen und Merkmalsausprägungen. Durch die Darstellung in einer einzelnen Betrachtungsebene gemeinsam mit dem aktuellen Suchergebnis können die Ergebnisse der jeweils aktuellen Auswahl sofort überprüft und gegebenenfalls sofort korrigiert werden. Insbesondere komplexe Suchvergänge werden damit erheblich erleichtert und sind auch ohne Anwendung von logischen Operatoren möglich.

Vorteilhafte Ausgestaltungen ergeben sich aus den Unteransprüchen.

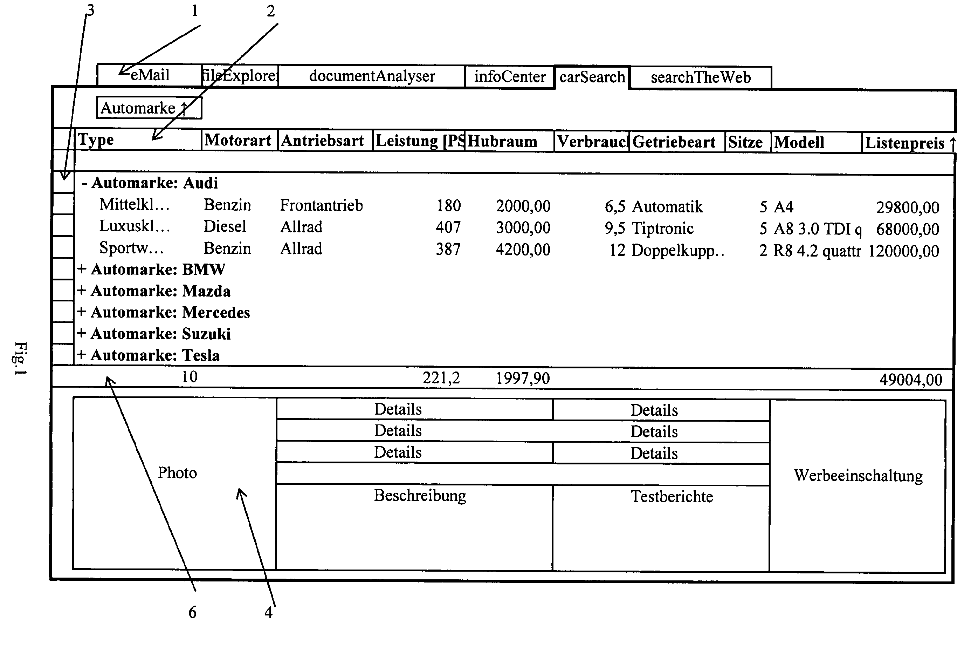

Die Erfindung wird anhand eines in den Figuren 1 bis 10 dargestellten Ausführungsbeispieles näher erläutert.

Die Figuren zeigen schematisch die Darstellung der verfügbaren Objektgruppen und Merkmalsklassen, der in einer Merkmalklasse enthaltenen unterschiedlichen Merkmalsausprägungen und der durch einen bestimmten Auswahlvorgang ermittelten Dokumente auf einem Anzeigegerät eines Datenverarbeitungsgerätes. Das erfindungsgemäße Ausführungsbeispiel betrifft Suchfunktionen zu allgemeinen Daten auf einem Computer und als besonderen Anwendungsfall die Suche von Dokumenten zu Kraftfahrzeugen.

Nach dem Programmstart wird auf dem Bildschirm das in Fig. 1 dargestellte Fenster geöffnet, welches in Form einer aus mehreren Einzelblättern aufgebauten Tabelle sowohl die Suchkriterien, als auch das aktuelle Ergebnis enthält.

Dabei werden die bei dem Ausführungsbeispiel verfügbaren Objektgruppen eMail, fileExplorer, documentAnalyser, infoCenter, carSearch und searchTheWeb in einer sogenannten Reiterzeile 1 dargestellt, welche die einzelnen Tabellenblätter markiert.

Die Auswahl eines Reiters wie beispielsweise carSearch öffnet die in dem entsprechenden Tabellenblatt enthaltene Darstellung der dieser Objektgruppe zugeordneten Merkmalsklassen Type, Motorart, Antriebsart Leistung, etc. als Spaltenüberschriften 2, sowie der in jeder Merkmalsklasse bzw. den der jeweiligen Spalte zugeordneten Tabellenzellen 3 enthaltenen unterschiedlichen Merkmalsausprägungen wie beispielsweise bei der Merkmalsklasse Type die Automarken Audi, BMW, Mazda, Mercedes Suzuki und Tesla. Darüber hinaus werden in einem Ergebnisbereich 4 Hinweise auf die durch den aktuellen Auswahlvorgang ermittelten Dokumente angezeigt.

Die Funktion der erfindungsgemäßen Suchmaschine wird im Folgenden beispielhaft anhand der Suche nach einem KFZ, beschrieben.

Erster Schritt ist dabei die Selektion des Reiters "carSearch" in der Reiterzeile 1 und die damit verbundene Öffnung des Tabellenblattes mit den Informationen über die gespeicherten Dokumente zu Fahrzeugen. Es werden sämtliche Ergebnisse zum Thema angezeigt.

Durch weitere Auswahlvorgänge bei Merkmalsklassen und Merkmalsklassenausprägungen wird die Anzahl der Treffer derart reduziert, dass letztlich wenige überschaubare Ergebnisse übrig bleiben. Das Verfahren ist daher transparent, immer vollständig, unabhängig von örtlichen und zeitlichen Faktoren und ergebnisneutral hinsichtlich der Zurverfügungstellung der Ausgangsdaten, die Reihenfolge der Auswahlvorgänge bestimmt, welche Ergebnisse zuoberst in der Ergebnismenge stehen.

Der Auswahlvorgang entspricht einer Filterung der verfügbaren Dokumentenmenge. Im Gegensatz zu einer Stichwortsuche, bei der ein bestimmtes Suchwort wie beispielsweise "2000" sowohl den Hubraum wie auch das Ladevolumen, Gewicht etc. betreffen und damit die unterschiedlichsten, unerwünschten Ergebnisse bewirken kann, ist die Auswahl bei der erfindungsgemäßen Suchmaschine mit einer Merkmalsklasse verknüpft und führt daher auch unmittelbar zur gewünschten Einschränkung.

Zur weiteren Erhöhung der Übersichtlichkeit kann es zweckmäßig sein, die vorhandenen Merkmalsausprägungen einer Merkmalsklasse hierarchisch anzuzeigen. Dazu werden beispielsweise bei der Merkmalsklasse Type lediglich die Automarken Audi, BMW, Mazda etc angezeigt, ein Plus-Zeichen vor dem jeweiligen Markennamen weist allerdings darauf hin, dass es dazu noch Untergruppen gibt. Diese werden in an sich bekannter Weise bei Anwahl des entsprechenden Eintrages angezeigt.

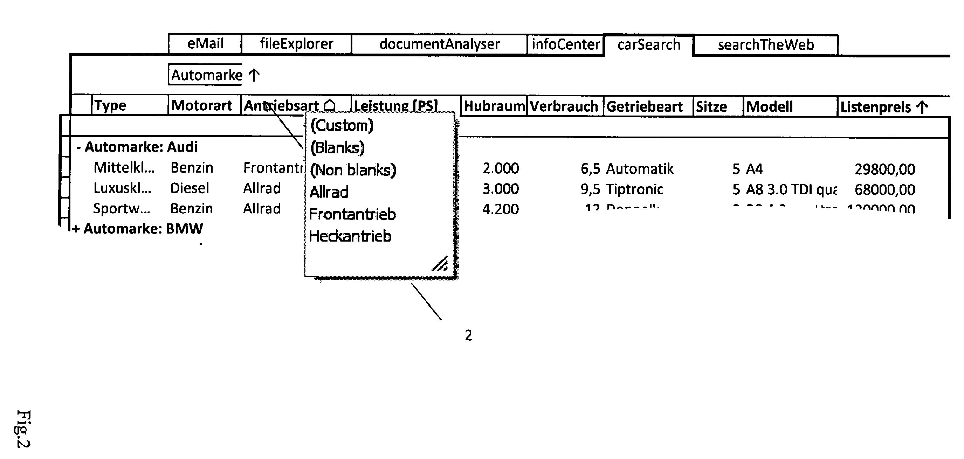

Wie in Fig. 2 dargestellt, kann nun beispielsweise durch Auswahl einer "Antriebsart" eine weitere Einschränkung vorgenommen werden.

Hier zeigt sich ein weiterer Vorteil der erfindungsgemäßen Suchmaschine: die für die betrachtete Merkmalsklasse sinnvollen einschränkenden Begriffe Allrad, Frontantrieb und Heckantrieb werden dem Benutzer vorgegeben.

Der Filterungsprozess erfolgt dynamisch mit unmittelbarem Feedback zu jeder vorgenommenen Einschränkung. Dazu zeigen die weiteren Figuren Beispiele:

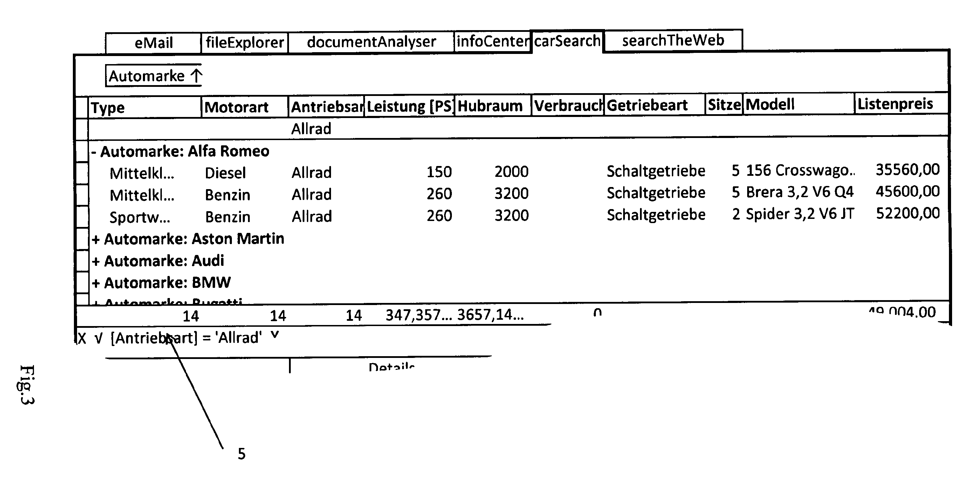

In Fig. 3 ist die Ergebnismenge nach der Einschränkung auf Autos mit Allradantrieb dargestellt. Die Merkmalsausprägung "*Allrad*" ist sowohl aus der entsprechenden Spalte wie auch aus einer ergänzenden mathematischen Darstellung 5 im unteren Bereich der Darstellung ersichtlich.

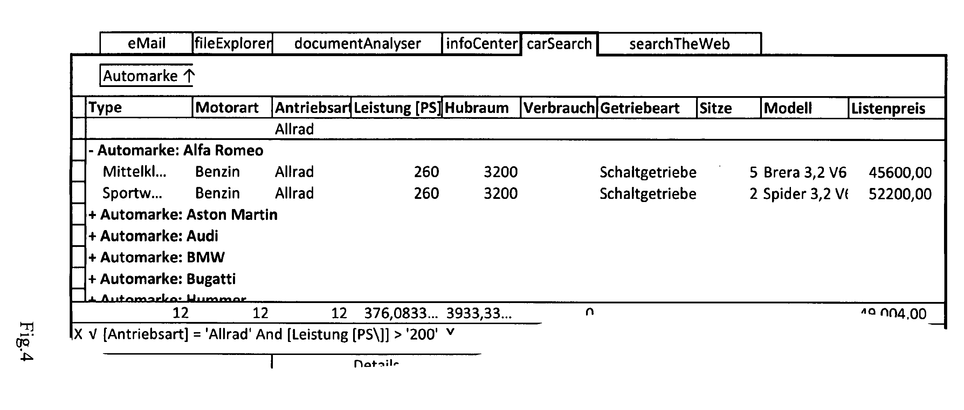

In dem Beispiel gemäß Fig. 4 wurde ein weitere Einschränkung einer Merkmalsausprägung angewendet: die Leistung soll größer als 200 PS sein.

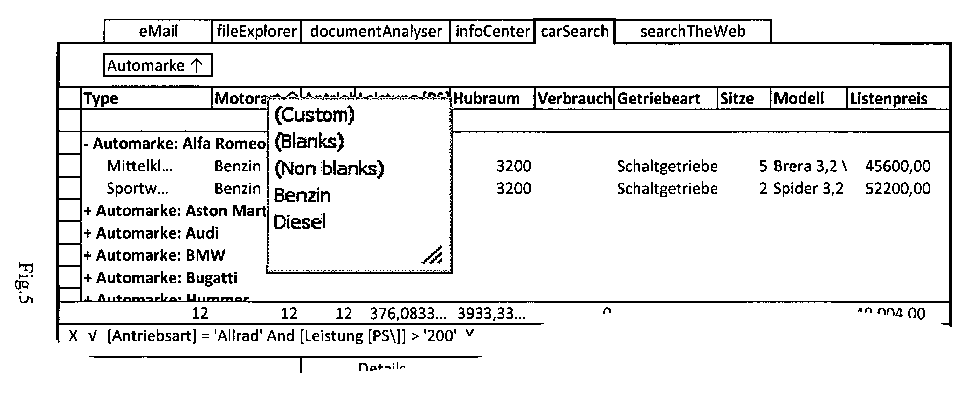

Jede Einschränkung einer Merkmalsklasse führt zu einer Anpassung der Merkmalsausprägungen der anderen Merkmalsklassen. Wie in Fig. 5 dargestellt, sind bei dem betrachteten Beispiel für die vorangehenden Einschränkungen in der Merkmalsklasse Motorart nur die Attribute *Benzin* und *Diesel* verfügbar. Die weiteren Merkmalsausprägungen *Elektro* und *Hybrid* wurden durch die vorangehenden Einschränkungen bereits ausgefiltert.

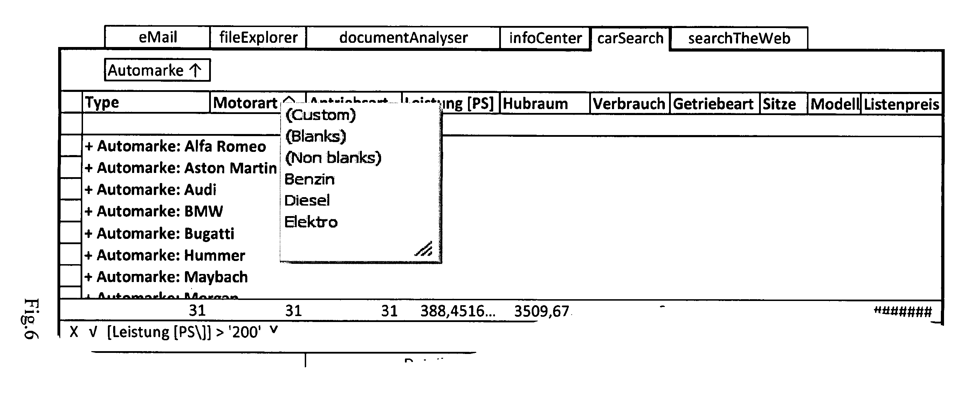

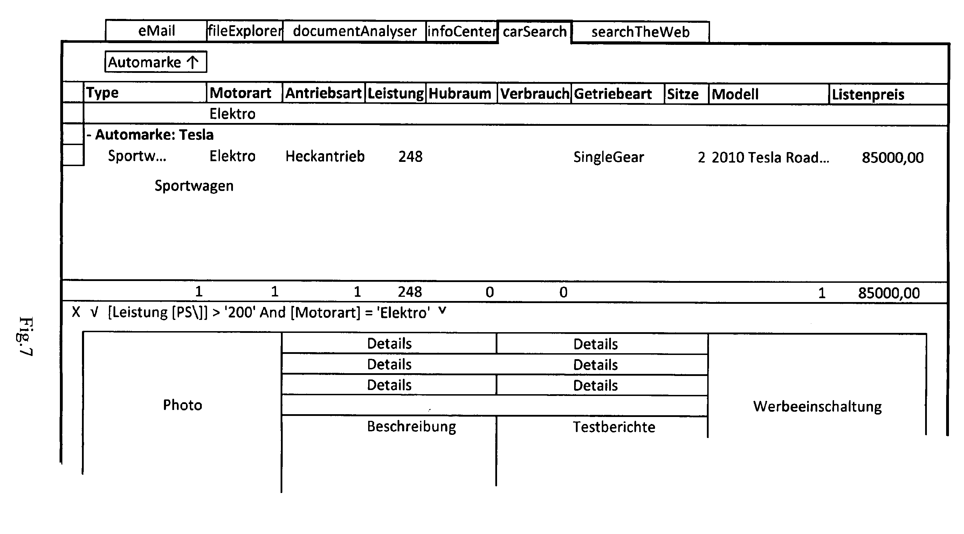

Wie in Fig.6 dargestellt, führt die Rücknahme einer Einschränkung wie beispielsweise der Auswahl "*Allrad*" in der Merkmalsklasse "Antriebsart" zu einer Erweiterung der Auswahlmöglichkeiten *in der* Merkmalsklasse "*Motorar*" um die Merkmalsausprägung "*Elektro*". Da in diesem Beispiel die Ergebnisliste noch relativ viele Einträge enthält, ist eine weitere Einschränkung zweckmäßig. Diese kann, wie in Fig.7 dargestellt, durch die Einschränkung der Motorart auf *Elektro* erfolgen. Die nunmehr vorliegenden Einschränkungen, liefern nur noch ein einziges Ergebnis.

Durch Auswahl dieses Eintrages in der Ergebnisliste werden die zu dem Thema vorhandenen Dokumente dargestellt.

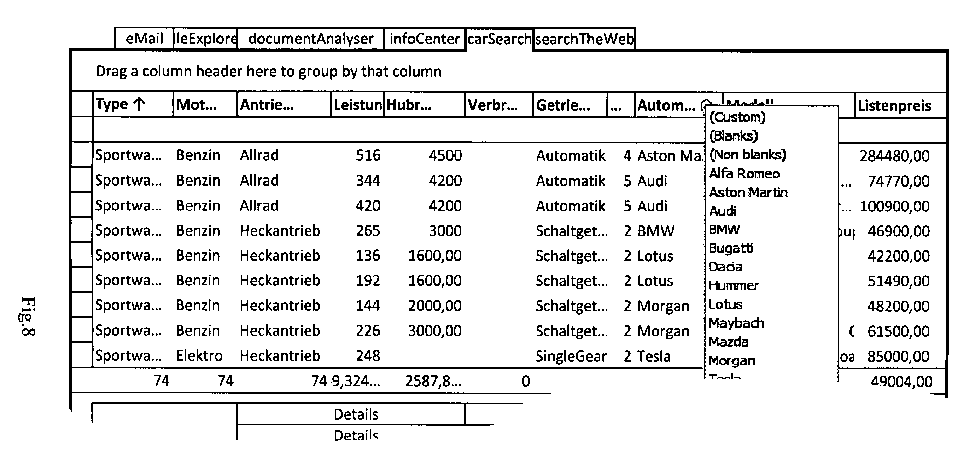

Wie in den Fig.8, Fig. 9 und Fig. 10 dargestellt, kann die erfindungsgemäße Suchmaschine auch dazu verendet werden, Einträge miteinander zu vergleichen. Beim vorliegenden Ausführungsbeispiel können beispielsweise Autos mit bestimmten Eigenschaften miteinander verglichen werden.

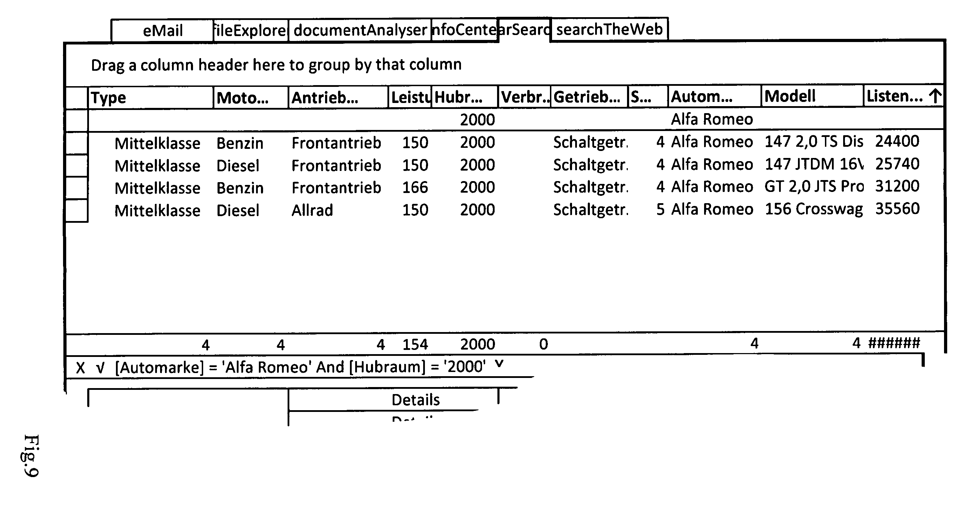

Wie in Fig.9 gezeigt, können beispielsweise alle Alfa Romeo Modelle mit einem Zweilitermotor in der Ergebnisliste angezeigt und direkt über die angeführten Eigenschaften miteinander verglichen werden. Hier wird unter anderem ersichtlich, dass 3 Modelle die gleiche PS- Anzahl haben, ein viertes Modell jedoch etwas mehr.

Die Treibstoffart hat offenbar keinen Einfluss auf die Leistung - die ersten beiden Einträge zeigen die gleiche PS- Anzahl trotz unterschiedlicher Treibstoffart.

Sortiert wurde nach dem Listenpreis - die Differenz zwischen dem günstigsten und dem teuersten Auto mit gleichem Hubraum wird in dieser Übersicht sehr deutlich erkennbar. Als weitere Information werden in einer Statistikzeile 6 unter den Listeneinträgen verschiedene Informationen angeboten, im Falle der ersten 3 Spalten wird die Anzahl der Ergebnisse angegeben, in der Spalte mit dem Listenpreis der Mittelwert, ebenso in der Spalte *Leistung*.

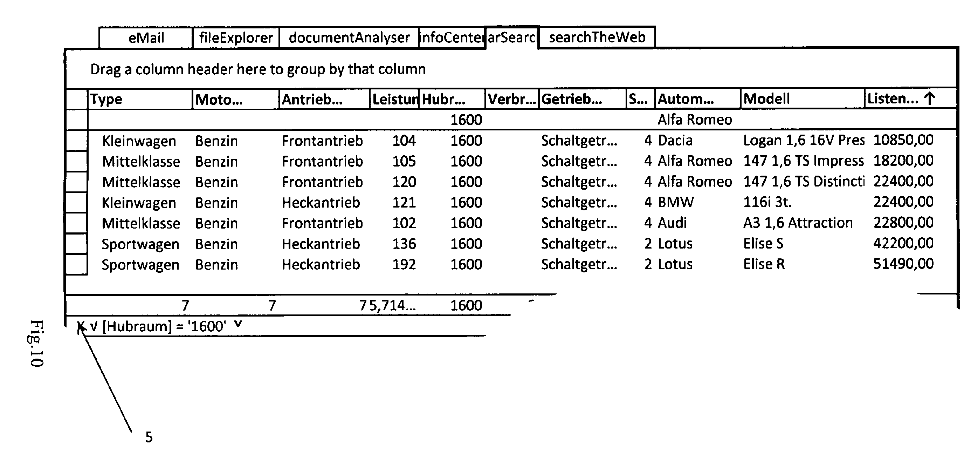

Eine interessante Auswahl wird beim Ausführungsbeispiel auch dadurch erzielt, dass wie in Fig.10 dargestellt, eine Einschränkung auf den Hubraum erfolgt. Die Auswahl von 1600 cm³ als Filter liefert ein interessantes Ergebnis, vom € 10.000,-Kleinwagen mit etwas über 100 PS bis zum € 50.000,- Sportwagen mit beinahe doppelter Leistung.

So kann auch eine Reihe von weiteren Fragen schnell beantwortet werden:
Wer bietet Hybridautos an, wer Elektroautos?
Was ist das Allradfahrzeug mit dem besten Preis/Leistungsverhältnis?
Welche 7-Sitzer sind am Markt?
Welche Autos haben ein Ladevolumen über 2000 Liter?
Was sind die sparsamsten Modelle?

Die Erfindung bietet daher eine Suchmaschine, mit der ohne fachliche Vorkenntnisse auch komplexe Suchvorgänge einfach und schnell durchgeführt werden können.

Im Ausführungsbeispiel wurde die Suche von Dokumenten zu Kraftfahrzeugen behandelt. Die erfindungsgemäße Suchmaschine eignet sich aber in gleicher Weise für andere Themengebiete, lediglich beispielhaft seien dazu noch angeführt:
Tarife und sonstige Bedingungen zu (Mobil-)Telefonen, Internetzugängen, Versicherungen, etc;
Computerprogramme und Services, lokal installiert oder über Web verfügbar, Consumerprodukte wie Computer, Bücher, Multimedia,..; oder auch allgemeine Informationen nach dem Beispiel von Universallexika.

### Bezugszeichenliste

- Reiterzeile: 1
- Spaltenüberschriften: 2
- Tabellenzellen: 3
- Ergebnisbereich: 4
- mathematische Darstellung: 5
- Statistikzeile: 6

## Patentansprüche

1. Suchmaschine zur Ermittlung von Dokumenten einer Datenbasis, die einer Abfrage eines Benutzers entsprechen, **dadurch gekennzeichnet, dass** die Dokumente einer von mehreren Objektgruppen zugeordnet sind, dass weiterhin jede Objektgruppe Merkmalsklassen aufweist, denen die Dokumente dieser Objektgruppe ebenfalls zugeordnet sind, und dass die Suche nach einem Dokument auf der Auswahl von Objektgruppen und Merkmalsklassen beruht und anhand einer Darstellung (1, 2, 3, 4, 5, 6) der verfügbaren Objektgruppen und Merkmalsklassen, der in einer Merkmalklasse enthaltenen unterschiedlichen Merkmalsausprägungen und der durch einen bestimmten Auswahlvorgang ermittelten Dokumente in einer einzelnen Betrachtungsebene erfolgt.

2. Suchmaschine nach Anspruch 1 , **dadurch gekennzeichnet, dass** die Darstellung auf einem Anzeigegerät eines Computers und die Auswahl von Objektgruppen, Merkmalsklassen und Merkmalsausprägungen durch Auswahl eines entsprechenden Bildelementes der Darstellung (1, 2, 3, 4, 5, 6)mittels Eingabegerät erfolgt.

3. Suchmaschine nach Anspruch 2 , **dadurch gekennzeichnet, dass** als Anzeige- und Eingabegerät ein Touchscreen vorgesehen ist.

4. Suchmaschine nach einem der Ansprüche 1 bis 3, **dadurch gekennzeichnet, dass** die Darstellung (1, 2, 3, 4, 5, 6)der verfügbaren Objektgruppen, Merkmalsklassen und Merkmalsausprägungen, sowie der durch einen bestimmten Auswahlvorgang ermittelten Dokumente in Tabellenform erfolgt.

5. Suchmaschine nach einem der Ansprüche 1 bis 4, **dadurch gekennzeichnet, dass** einer der Objektgruppen Emails zugeordnet sind und dass diese Objektgruppe als Merkmalsklassen zumindest den Absender, die Empfänger, den Zustand sowie das Datum des Ein- Ausganges umfasst.
